# EUROPEAN PATENT SPECIFICATION

(11) **EP 3 191 558 B1**
(45) Date of publication and mention of the grant of the patent: **09.12.2026**
(21) Application number: 15760185.7
(22) Date of filing: 08.09.2015
(51) Int. Cl.: C09D 167/00

(54) **POWDER COATING**
PULVERBESCHICHTUNG
REVÊTEMENT EN POUDRE

(30) Priority: 08.09.2014 EP 14183889
(43) Date of publication of application: 19.07.2017
(73) Proprietor: Jotun A/S, 3202 Sandefjord (NO)
(72) Inventor: GRORUD, Mette, N-3282 Kvelde (NO); OWE, Lars-Erik, N-3209 Sandefjord (NO)
(74) Representative: Dehns
(86) International application number: PCT/EP2015/070499
(87) International publication number: WO 2016/038036

(56) References cited:
- EP-A1- 1 561 787
- EP-A2- 0 134 493
- CN-A- 102 876 203
- JP-A- 2005 162 930

## Description

This invention relates to powder coatings formed with a metallic effect using pigments such as aluminium. In particular, the invention relates to the avoidance of corrosion of these pigments in the formed coating. The invention also relates to the use of the powder coating to coat a substrate as well as to a process for the manufacture of the powder coating, a process for curing the coating and uses of the coating. The powder coating of the invention forms a top coat on the substrate.

Traditionally, coating powders have been made by the extrusion of a mixture of resins and curing agents to obtain a homogeneous mixture and then grinding the extrudate and screening the product to obtain the desired particle sizes and particle size distribution. The powder is then electrostatically sprayed onto a substrate, traditionally a metal substrate, and cured at high temperatures. The nature of the finish on the substrate was adjusted by the addition of additives.

A growing market for powder coatings is in the field of metallic powder coatings which provide a metallic effect on the surface of an article being coated. The metallic effect is achieved by adding metallic pigments into the powder coating at an appropriate time. These metallic effect pigments may corrode, however, if they are exposed to oxygen, humidity etc. This ruins the appearance and integrity of the coating. To avoid this problem, current practice involves the use of an extra clear coating layer applied separately over the metallic effect coating in order to provide protection against corrosion. The application of this further coat is time consuming and expensive however, and the customer wants a simpler solution to avoid the use of the extra clear coat. One coat less saves much time and money. The present inventors solve this problem through the addition of a silane to the powder coating. This surprisingly stabilises the metallic pigment against corrosion and thus the need for a clear coating layer is negated.

The problem of corrosion of metallic pigments has been recognised before and attempts have been made to solve this problem in other ways, with limited success. In US2009/0264575, the inventors suggest coating the metallic pigment particles. The coating is ideally based on epoxy and polyester resins and is therefore compatible with the binder which generally forms the major part of the film forming coating. The idea is that embedding the metallic pigments within the epoxy/polyester resin prevents corrosion of the pigment. In essence therefore, this reference provides a metallic particle that is coated to isolate the metal from air and moisture. That coated metallic particle can be used as a masterbatch in a powder coating to provide the pigment in desired amounts. Some manufacturers even use a double coating technique, e.g. based on an inorganic/organic double coating such as a silica coating followed by an acrylate coating or polyester/epoxide coating.

Coating of the metal particles improves the stability of the pigments during storage, but the resistance of these particles to corrosion once applied to a substrate is still not ideal Thus whilst many metallic particles are coated to enable storage over a prolonged period before application, our experience is that on application, these particles are still susceptible to oxidation.

Examples of coated materials include particles coated with silica or another inert inorganic material for greater chemical resistance and durability.

There is also an issue with metal effect. The inventors have tested pigments coated with some organic polymers and they do not give sufficient metallic effect. It is clear that the protective coating detracts from the metallic effect of the pigment itself. To increase metallic effect to an acceptable level requires the addition of more particles. Ignoring the obvious cost implication of having more metallic particles, this also leads to more corrosion problems on application of the metallic pigments to a substrate. This problem is particularly tricky when a double coated particle is used as the coating on such a particle can be large and hence detrimental to metal effect.

The present inventors have found that the application of a silane along with a separate metallic pigment particle, wherein the pigment contains the metal in elemental or alloy form, coated or non-coated, improves corrosion resistance.

In EP-A-1593716 and related WO00/22053 and WO00/22054, a powder coating composition is described comprising a metallic pigment, film forming polymer and a stabilising additive. The stabilising additive is however, silica or alumina, in particular a material formed through the reaction of silica with a trivalent metal or naturally occurring metal silicates. Other suggested additives are metal phosphates, such as strontium hydrogen phosphate or borates. Silanes are not suggested.

Silanes are however present in a powder coating in JP2005/162930A although this application addresses a different problem. JP2005/162930A describes a powder coating primer layer comprising a film forming polymer and a silane. The primer acts as an undercoat for metallic substrates such as alloy wheels. The coating can be based on polyester/epoxy binder in combination with a phosphoric acid modified epoxy resin. This component is added to ensure adhesion to the substrate. However, the films do not generally contain metallic pigments and there is no suggestion that silanes can prevent corrosion of metal pigments. A primer layer would normally not contain any metallic pigment
The present inventors have remarkably found that the problem of corrosion of metallic pigments can be addressed by adding a silane to the powder coating composition. This simple solution avoids clear top coats and avoids the need to coat each individual metallic pigment particle.

We note that US2009/0264575 mentions the use of silanes as primers to improve adhesion between the metallic particles and the binding agent coating. In particular, there is a suggestion that a silicon dioxide coated metallic particle has a layer of silane deposited thereon before addition of a polymeric layer thereover.

EP0134493 discloses high solids thermosetting organic solvent solution coating compositions which are useful for sealing the pores in fibre reinforced plastics. These compositions contain a mixture of resins comprising (1) from 30% to 70% of one or more hydroxy functional resins having a number average molecular weight of at least about 700, a Gardner bubble viscosity less than about Z4 measured in methyl ethyl ketone at 90% solids at 25°C., and at least 5% of the hydroxy groups thereof being primary hydroxy groups, (2) from 10% to 70% of low molecular weight epoxy ester made by esterifying one or more resinous polyepoxides having a 1,2-epoxy equivalency of at least 1.2 with an approximately stoichiometric proportion of monocarboxylic fatty acid to provide an essentially epoxy-free ester having a Gardner bubble viscosity less than Z4 at 75% solids in xylol at 25°C., and (3) the balance of the mixture, but not less than 15% thereof, being a curing agent having a plurality of groups reactive with the hydroxy groups in the hydroxy resin and in the epoxy ester.

EP1561787 provides a powder paint excellent in productivity and cost, because the powder paints not adhered to the substrate can recovered and used. Disclosed are powder paints with high coating efficiency and fine textured coated films excellent in attractiveness of appearance and water resistance. The powder paints are characterised in that the pigment particles are bound to the base paint powders via shellac. The powder paints allow uniform and firm binding of pigment particles to base paint powder by the action of shellac, but also provide the resulting coated films with excellent attractiveness of appearance.

CN 102876203 discloses a super wear-resistant metal powder coating, and belongs to the technical field of coating materials. The document aims to solve the technical problems of poor wear resistance and low product hardness by providing the coating which is prepared from the following components by weight percent: 25 to 35% of polyester; 25 to 35% of epoxy resin; 0.5 to 1.5% of flatting agent; 0.5 to 1.5% of brightening agent; 5 to 15% of super wear-resistant additive; 1.0 to 3% of silver powder; 15 to 20% of coupling agent; and 5.0 to 10% of crosslinker. The coating provides high hardness, which can be above 3H, with high stability and cohesiveness.

The silanes of use in the present invention must be separate from the metallic pigment.

### Summary of the invention

Viewed from one aspect the invention provides a substrate coated with a particulate coating composition, preferably a powder coating composition, comprising a blend of a first particulate composition comprising:
(i) at least one hardener such as at least one epoxy containing compound,
(ii) at least one polyester polymer, and
(iii) at least one silane, wherein the silane forms 0.1 to 10 wt% of the coating composition; and a second particulate composition comprising
(iv) at least one metallic pigment, wherein the pigment contains the metal in elemental or alloy form; and
wherein said particulate coating composition forms the top layer on the substrate.

Viewed from another aspect the invention provides a substrate coated with a primer layer and thereover a particulate coating composition, preferably a powder coating composition, comprising a blend of a first particulate composition comprising:
(i) at least one hardener such as at least one epoxy containing compound,
(ii) at least one polyester polymer, and
(iii) at least one silane, wherein the silane forms 0.1 to 10 wt% of the coating composition; and a second particulate composition comprising
(iv) at least one metallic pigment, wherein the pigment contains the metal in elemental or alloy form; and
preferably wherein said particulate coating composition forms the top layer on the substrate.

Viewed from another aspect the invention provides a substrate coated with a particulate coating composition or a substrate coated with a primer layer and thereover a particulate coating composition as herein defined wherein said powder coating composition is cured.

Viewed from another aspect the invention provides a particulate coating composition, preferably a powder coating composition, comprising a blend of a first particulate composition comprising:
(i) at least one hardener such as at least one epoxy containing compound,
(ii) at least one polyester polymer,
(iii) at least one silane, wherein the silane forms 0.1 to 10 wt% of the overall coating composition; and a second particulate composition comprising
(iv) at least one metallic pigment, wherein the pigment contains the metal in elemental or alloy form, and wherein
said coating composition preferably being free of a phosphoric acid-modified resin, e.g. one obtained by reacting a monoglycidyl ether compound and/or a monoglycidyl ester compound with a phosphoric acid or phosphoric acid ester.

Viewed from another aspect the invention provides a substrate coated with a particulate coating composition, preferably a powder coating composition, comprising:
(i) at least one hardener such as at least one epoxy containing compound,
(ii) at least one polyester polymer,
(iii) at least one metallic pigment, wherein the pigment contains the metal in elemental or alloy form; and
(iv) at least one silane, wherein the silane forms 0.1 to 10 wt% of the coating composition, and which is separate from said metallic pigment,
wherein said particulate coating composition forms the top layer on the substrate.

Viewed from another aspect the invention provides a substrate coated with a primer layer and thereover a particulate coating composition, preferably a powder coating composition, comprising:
(i) at least one hardener such as at least one epoxy containing compound,
(ii) at least one polyester polymer,
(iii) at least one metallic pigment, wherein the pigment contains the metal in elemental or alloy form; and
(iv) at least one silane, wherein the silane forms 0.1 to 10 wt% of the coating composition, and which is separate from said metallic pigment,
preferably wherein said particulate coating composition forms the top layer on the substrate.

Viewed from another aspect the invention provides a substrate coated with a particulate coating composition or a substrate coated with a primer layer and thereover a particulate coating composition as herein defined wherein said powder coating composition is cured.

Viewed from another aspect the invention provides a particulate coating composition, preferably a powder coating composition, comprising:
(i) at least one hardener such as at least one epoxy containing compound,
(ii) at least one polyester polymer,
(iii) at least one metallic pigment wherein the pigment contains the metal in elemental or alloy form; and
(iv) at least one silane, wherein the silane forms 0.1 to 10 wt% of the overall coating composition and which is separate from said metallic pigment,
said coating composition preferably being free of a phosphoric acid-modified resin, e.g. one obtained by reacting a monoglycidyl ether compound and/or a monoglycidyl ester compound with a phosphoric acid or phosphoric acid ester.

Viewed from another aspect the invention provides a process for producing a particulate coating composition, preferably powder coating composition, comprising blending at least one hardener such as at least one epoxy containing compound and at least one polyester polymer, and optionally at least one silane to form a mixture;
extruding and milling said mixture to obtain particles;
adding at least one metallic pigment, wherein the pigment contains the metal in elemental or alloy form, and optionally a silane to form a particulate powder coating, wherein the silane forms 0.1 to 10 wt% of the coating composition;
and with the proviso that said silane is added in at least one step of the process, preferably only one step of the process and that the silane is separate from said metallic pigment.

Viewed from another aspect the invention provides the product of the process as hereinbefore described.

Viewed from another aspect the invention provides a process for coating a substrate with a powder coating as hereinbefore defined, e.g. using electrostatic spraying comprising apply said powder coating to said substrate, e.g. using electrostatic spraying and optionally curing the coating.

Viewed from another aspect the invention provides a substrate coated with a powder coating as hereinbefore defined, especially a substrate comprising a primer layer and a top coat layer as herein defined.

Viewed from another aspect the invention provides a substrate coated with a cured powder coating as hereinbefore defined.

Viewed from another aspect the invention provides use of a silane to prevent corrosion of a metallic pigment present in a powder coating composition comprising at least one hardener such as at least one epoxy containing compound, at least one polyester polymer, at least one silane and at least one metallic pigment, wherein the pigment contains the metal in elemental or alloy form, and wherein the silane forms 0.1 to 10 wt% of the coating composition.

It is preferred if the coating described herein is a top coat. Thus, no further coating should be applied on the top of the coating of the invention.

### Detailed description of the invention

This invention relates to a powder coating composition which can be used to coat a substrate. The powder coating composition must contain at least four components: at least one hardener such as an epoxy containing compound, at least one polyester polymer, at least one silane, wherein the silane forms 0.1 to 10 wt% of the coating composition, and at least one metallic pigment, wherein the pigment contains the metal in elemental or alloy form. The powder coating composition of the invention is also used as a top coat on a substrate, which may or may not be provided with a primer layer. The term top coat implies that no additional coating layer is applied on top of the powder coating layer of the invention.

The silane is believed to prevent corrosion of the metallic pigment within the coating thus avoiding the need for the application of a clear top coat over the coating layer.

The particulate composition of the invention is preferably obtainable by the blending of two particulate, preferably powder compositions. A particulate composition containing a silane needs to be blended with a particulate composition containing a metallic pigment. The silane should form 0.1 to 10 wt% of the coating composition and the pigment should contain the metal in elemental or alloy form. This just emphasizes that the silane and pigment are preferably separate components of the blend and a silane should be present which is not a coating on the pigment.

### Polyester polymer

The coating composition of the invention contains at least one reactive polyester polymer. The term reactive implies that the polyester polymer must contain functional groups that are capable of reacting with the functional groups of the hardener to cure the coating. Suitable functional groups present on the polyester include carboxyl groups, ester groups, isocyanate groups and hydroxyl functional groups. Ideally, the polyester is solid. The polyester is further preferably a carboxylated or hydroxylated polyester, especially a saturated, carboxylated polyester resin or a saturated, hydroxylated polyester resin. Most preferably, the polyester is a carboxylated polyester resin and therefore comprises a plurality of pendant COOH groups.

Thus the polyester polymer is preferably a solid resin containing a plurality of free carboxyl groups or hydroxyl groups. Preferably, the polyester polymer has a Tg above 40°C, more preferably above 50°C.

Ideally, the polyester resin is characterised in terms of its acid value (AV). Most preferred are polyester resins with acid value (AV) between 20-80 mg KOH/g, such as 25 to 60 mg, KOH/g, preferably 30-60 mg KOH/g, especially 48 to 58 mg KOH/g.

More preferably, the polyester polymer is an acid functional polyester, especially one having the AV above.

The polyester polymer therefore preferably contains a plurality of carboxyl groups. These groups must be capable of reacting with the hardener, ideally epoxy groups and must therefore be available for reaction. That means carboxyl groups should be pendant on the molecule. Moreover, this component of the powder coating of the invention is a polymer, e.g. is formed from the polymerisation of monomers at least one of which is one containing a carboxyl group

It is possible to use a mixture of polyesters polymers or use one polyester polymer.

The use of carboxyl functional polyesters is preferred especially those designated 50/50 type resins to 80/20 type resins (i.e. where there is 80 wt% carboxy functional polyester is used to 20 wt% epoxy compound of the binders). The value of AV and EEW, should preferably complement each other. For example, the AV of a 50/50 type resin may be 60 to 80 mg KOH/g. Resins that are defined as 80/20 resins will have lower AV, such as 20 to 40 mg KOH/g.

The monomers used to form the polyesters of the invention may be based on terephthalic acid, isophthalic acid monomers together with, for example glycols such as neopentyl glycol.

Alternatively the polyester may be OH functional. Hydroxyl values are preferably about 50 - 300 mg KOH/g.

Another alternative may also be unsaturated polyesters. These can be hardened using peroxide initiators. The term unsaturated polyester implies the presence of multiple unsaturated bonds in the side chains of the polyester, e.g. introduced through (meth)acrylate. Unsaturated polyesters of use in this embodiment are amorphous or crystalline. Crystalline unsaturated polyesters are described in WO2011/138431 A1 and WO2011/138432 A1. These materials can be hardened using peroxides, optionally in conjunction with infrared radiation or radiation or using photo initiators for radiation cure with UV. The hardener in this regard is the initiator.

The polyester polymer is preferably one with a Mw of at least 1000, more preferably at least 2000. The upper Mw value may be 10,000. Preferred Mw values are 2000 - 6000, preferably 2500 to 5000, such as about 3000. The molecular weights are determined by gel permeation chromatography (GPC) using a polystyrene standard.

Such resins are well known in the art and are sold under the trade names such as Uralac from DSM and Crylcoat from Allnex.

### Hardener

It is also essential to use at least one hardener. The hardener reacts with the polyester polymer during the curing reaction to provide a film coating on the substrate.

It is preferred if the hardener is an epoxy containing compound such as an epoxy resin. It is also possible to use a mixture of epoxy containing compounds.

The epoxy containing compound is preferably an epoxy resin. Ideally it is a solid resin containing one or more epoxy groups. Suitable resins are again well known in the art and well known commercial products. Epoxy containing compound include TGIC (triglycidyl isocyanurate), Araldite PT 910/ PT912, bisphenol A based resins, novolac resins, 4,4'-isopropylidenediphenol-epichlorohydrin resins (bisphenol F) based resins, glycidyl methacrylates (GMA) and so on.

In one preferred embodiment, the epoxy resin is TGIC, Araldite PT 910/ PT912, bisphenol A based resins, novolac resins, or 4,4'-isopropylidenediphenol-epichlorohydrin resins (bisphenol F) based resins. Thus, in one embodiment the using of glycidyl methacrylate (GMA) or glycidyl methacrylates (GMA) in general is excluded.

Most preferred are solid epoxy resins with an equivalent epoxy weight (EEW) of 300-2000. These resins are often described by their "type". Type 2, 2.5, 3, 4 and novalac type resins are all suitable here. Type 2 resins may have an EEW = 550-700, e.g. Epikote resin 1002, Epikote resin 3022-FCA. Type 2.5 resins may have a EEW = 600-750, e.g. Araldite GT 6450. Type 3 resins may have EEW = 700-850, e.g. Epikote resin 3003, Araldite GT 7004. Type 4 type resins may have EEW = 800-1000, e.g. Epikote resin 1055. Novalac type resins may include Epikote resin 2017 or Araldite GT 7255.

The use of an epoxy resin of EEW 730 to 840 (such as type 3) is especially preferred.

As an alternative to epoxy resins, the invention also envisages the use of other hardeners such as hydroxyalkyl amide hardeners and polyisocyanate hardeners such as one of the uretdione type, or caprolactam blocked isocyanates (e.g. isophorone diisocyanate). In particular, the polyisocyanate hardeners are preferably used with hydroxyl functionalised polyester resins to give polyurethanes. Hydroxy alkyl amide hardeners can be used with carboxylic functionalized polyester resins. The use of hydroxy alkyl amide hardeners is especially preferred such as Primid XL-552, available from Ems Primid.

A further alternative hardener is simply a peroxide where the polymer is an unsaturated polyester and can undergo a curing reaction with itself upon initiation with a peroxide.

It will be appreciated that the hardener and polyester need to react in order to cure the coating. Accordingly, it is preferred if these components are mixed in such a ratio that reactive groups, e.g. carboxyl, in the polyester and e.g. epoxy groups within the hardener are within ±25% of stoichiometric ratio. A carboxyl and epoxy ratio within ±10% of stoichiometric ratio is more preferred. A carboxyl and epoxy ratio within ±5% of stoichiometric ratio is most preferred.

The skilled man will be aware that some of the additives discussed below may contain carboxyl groups. When calculating the EEW to AV ratio, account should be taken of the contribution made by any carboxyl groups in the standard additives used in the powder coating.

It will be appreciated therefore that this calculation is based on the total number of carboxyl and epoxy groups present. If compounds contain multiple carboxyl or epoxy groups that must be considered in these calculations that will nevertheless be routine for the skilled chemist.

The combination of the hardener and polyester polymer is called the binder system herein. Ideally, the invention employs a hybrid epoxy-carboxyl functional polyester binder system. These systems are well known in the art. It is within the scope of the invention to employ a pure polyester binder where that binder is a unsaturated polyester which can be hardened via an epoxide.

Thus, the polyester may form 50 to 97 w% of the binder, preferably 60-96wt% of binder. The hardener may form 3 to 50, preferred 3 to 40 wt% of the binder. The amount of polyester polymer will therefore be around the same as or exceed that of the hardener compound. Where an unsaturated polyester binder is employed the polymer can form almost 100wt% of the binder, with a small contribution from the initiator hardener.

The amount of binder in the powder coating of the invention may be 40 to 99 wt%, preferably 50 to 95 wt%.

The powder coating of the present invention is preferably free of a phosphoric acid modified epoxy resin. The binder of the present invention is also preferably free of phosphoric acid modified epoxy resins.

### Metallic Pigment

The powder coating of the invention comprises a metallic pigment. The purpose of the metallic pigment is to provide a coated substrate with a metallic colour effect. These are used therefore to coat household appliances, furniture, building components, tools, vehicles and so on to provide a metallic effect coating. In the present invention the pigment contains the metal in elemental or alloy form.

Any metallic pigment can be used in this invention, provided the pigment contains the metal in elemental or alloy form, although the pigment should be one that is subject to corrosion. The present invention is primarily related to a method of reducing the corrosion or preventing corrosion of the metal pigment. It will be clear therefore that the pigment in question should be one that may corrode.

The metal in question is typically a transition metal (groups 3 to 12 of the periodic table), Al or Sn. The pigment can also be present as an alloy. The pigmentcontains the metal in elemental or alloy form rather than as a salt (e.g. oxide) or in ionic form. It will be appreciated therefore that many powder coatings contain titanium dioxide and other metal salts as fillers. Titanium dioxide is a white powder and is not subject to corrosion and is not a metallic pigment. The metallic pigment must be capable of providing a metallic effect in the formed coating.

The metallic pigment is usually in flake form or particle form and may comprise aluminium or an aluminium alloy or another metal or alloy, for example, stainless steel, copper, tin, bronze or brass (gold is generally too expensive) and may be used to produce various metallic effects including those referred to as "lustre" or "glamour" finishes. Combinations of two or more different metallic pigments may be used.

The metallic pigment is advantageously aluminium or an alloy thereof. A "leafing" or a "non-leafing" system may be used. In a leafing system, the aluminium flakes orient themselves in a continuous layer at or near the surface of the applied coating film, producing an opaque silver finish.

Non-leafing aluminium pigments, which orient themselves throughout the coating film, provide aesthetics quite unlike leafing aluminium pigments. They are unique in their ability to project "flop", polychromatic and sparkle effects. "Flop" is the ability to change colour when viewed at different angles. This capability is directly related to flake orientation in the film.

The metallic pigment(s) are usually incorporated in the powder coating composition after the extrusion or other homogenisation process (hereinafter "post-blended"). One form of post-blending method comprises dry-blending and any available dry-blending incorporation method may be used. Pigments can be added before or after milling, e.g. at the particle sieving stage. In theory however, metal pigments can be added at various stages of the manufacturing process, e.g. a portion before milling and a portion before sieving. The person skilled in the art can devise ways of adding the pigment to the powder coating.

In particular the pigment and the powder coating can be "bonded". A bonding method is to be understood as being a mixing process of a powder coating and a metallic pigment in which the metallic pigment particles are physically bonded to the powder coating particles by heating the mixture to the glass transition temperature of the powder coating. Adhesion of the metallic pigments to the surface of the powder coating particles is therefore achieved. For the avoidance of doubt, this bonding process does not result in a metallic particle coated with a silane. Rather, the process results in a bonded blend of powder coating and metallic particles.

A range of hammer and other textured metallic finishes can be produced using, in addition to the metallic pigment, an appropriate hammer or other structure additive.

The metallic pigment may be an uncoated or coated material. Examples of coated materials include pigments coated with silica or another inert inorganic material for greater chemical resistance and durability. Alternatively, the pigment may be coated with a polymeric material for similar purposes, for example, an acrylic, PTFE or thermosetting plastics material, or may be carried in a polymer or plasticiser which is compatible with the film-forming binder of the powder coating composition, such as a polyester/epoxide coating. As a further possibility, the metallic pigment may be coated with a colouring agent such as a metal oxide pigment such as, for example, iron oxide, to provide special colour effects. The use of metallic pigments coated with silica is preferred to improve the stability of the particles both during storage and during further coating. Double coated particles (e.g. using an inorganic then organic coating) are possible but less favoured as their metallic effect is reduced.

Ideally particles are not coated with an organic coating. Ideally particles are not coated with an oligomeric or polymeric coating. Particles are not coated with silane.

The total proportion of metallic pigment(s) incorporated in the powder coating composition may be in the range of from 0.1 to 10% by weight (based on the weight of the coating composition, for example, from 0.4 to 8% by weight, preferably from 0.5 to 5% by weight, typically from 1 to 4% by weight. These values refer to the actual weight of particles which may or may not be coated.

The particle size, d50 of the metallic pigment may be in the range of 3-50 µm. Typically, the particle size is d50 10-30 µm. Ideal average particle sizes are no less than d50 10µm. Particle sizes can be measured using a Malvern machine which gives size in d50. D₅₀ is the mass-median-diameter (MMD). The MMD is considered to be the average particle diameter by mass.

### Silane

The powder coating composition of the invention also contains at least one silane. There should be a silane present which is not part of the metallic pigment. It may be that silanes are used as adhesives in the formation of a coated metallic particle. Such a silane cannot act efficiently as a corrosion inhibitor according to the present invention. The silane defined in the invention should not therefore be a coating on a metallic particle or act as an adhesive within a metallic particle. It is separate therefrom. By separate therefrom therefore means that the silane is not coated onto the metallic pigment.

Silanes of use in the invention are generally of low Mw such as less than 400 g/mol. Suitable silanes are of general formula (I) or (II)

Y-R_{(4-z)}SiX_{z} (I)

or

Y-R_{(3-y)}R¹SiX_{y} (II)

wherein z is an integer from 1 to 3,
wherein y is an integer from 1 to 2,
R is a hydrocarbyl group having 1 to 12 C atoms optionally containing an ether or amino linker,
R¹ is a hydrocarbyl group having 1 to 12 C atoms;
Y is a functional group bound to R that can react with corresponding hardener functionalities, and
each X independently represents a halogen group or an alkoxy group.

Preference is given to isocyanate, epoxy, amino, hydroxy, carboxy, acrylate, or methacrylate groups as functional groups Y. The Y group can bind to any part of the chain R. It will be appreciated that where Y represents an epoxy group then R will possess at least two carbon atoms to allow formation of the epoxide ring system.

It is especially preferred if Y is an amino group or epoxy group. Amino groups are preferably NH₂.

It is especially preferred if X is an alkoxy group such as a C1-6 alkoxy group, especially methoxy or ethoxy group. It is also especially preferred if there are two or three alkoxy groups present. Thus z is ideally 2 or 3, especially 3. Subscript y is preferably 2.

R¹ is preferably C₁₋₄ alkyl such as methyl.

R is a hydrocarbyl group having up to 12 carbon atoms. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-Epoxypropoxy)propyl]trimethoxysilane: H₂COCHCH₂OCH₂CH₂CH₂Si(OCH₃)₃. It is preferred if the group Y does not bind to a carbon atom which is bound to such a linker -O- or -NH-.

R might therefore represent (C₆H₅)-NH-(CH₂)₃- or Ph-NH-(CH₂)₃- or (C₆H₅)-(CH₂)₃ and so on.

R is preferably an unsubstituted (other than Y obviously), unbranched alkyl chain having 2 to 8 C atoms optionally containing an ether or amino linker.

A preferred silane general formula is therefore of structure (III)

Y'-R'_{(4-z')}SiX'_{z'} (III)

wherein z' is an integer from 2 to 3, R' is a unsubstituted, unbranched alkyl chain having 2 to 8 C atoms optionally containing an ether or amino linker, Y' is an amino or epoxy functional group bound to the R' group, and X' represents an alkoxy group.

Examples of such silanes are the many representatives of the products manufactured by Degussa in Rheinfelden and marketed under the brand name of Dynasylan(R)D, the Silquest(R) silanes manufactured by OSi Specialties, and the GENOSIL(R) silanes manufactured by Wacker.

Specific examples include methacryloxypropyltrimethoxysilane (Dynasylan MEMO, Silquest A-174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), tris(3-trimethoxysilylpropyl) isocyanurate (Silquest Y-11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-1110), aminopropyltriethoxysilane (Dynasylan AMEO) or N-(2-aminoethyl)-3-aminopropyltrimethoxysilane (Dynasylan DAMO, Silquest A-1120) or N-(2-aminoethyl)-3-aminopropyltriethoxysilane, triamino-functional trimethoxysilane (Silquest A-1130), bis(gamma-trimethoxysilylpropyl)amine (Silquest A-1170), N-ethyl-gamma-aminoisobytyltrimethoxysilane (Silquest A-Link 15), N-phenyl-gamma-aminopropyltrimethoxysilane (Silquest Y-9669), 4-amino-3,3-dimethylbutyltrimethoxysilane (Silquest Y-11637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other specific silanes of interest include 3-Aminopropyltriethoxysilane, 3-Aminopropyltrimethoxysilane, N-(Aminoethyl)-aminopropyltrimethoxysilane H₂NCH₂CH₂NHCH₂CH₂CH₂Si(OCH₃)₃, 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂CH₂CH₂Si(OCH₂CH₃)₃, [3-(2,3-Epoxypropoxy)propyl]trimethoxysilane (H₂COCHCH₂OCH₂CH₂CH₂Si(OCH₃) ₃).

The use of silane ([3-(2,3-Epoxypropoxy)propyl]-triethoxysilane or 3-aminopropyltriethoxysilane is especially preferred. A mixture of silanes might also be used.

separate from said metallic pigment.

The amount of silane present in the powder coating as a whole is 0.1 to 10 wt%, preferably 0.2 to 6 wt%, more preferably 0.4 to 3 wt% on total weight, ideally 0.6 to 3 wt%.

The silane can be supported on a carrier or it can be added in its native form (or as part of a solution). The use of a carrier makes the addition of the silane easier as the silane can be added as a solid rather than liquid. Thus, silane materials in which 50 wt% is carrier material and 50 wt% is the silane can be employed. It will be clear that the amounts of silane quoted above in the powder coating as a whole refer to silane "per se" and do not count carrier material weight. If a carrier is used then the skilled person needs to adjust his weights accordingly.

Viewed from another aspect the invention therefore provides a particulate coating composition, preferably a powder coating composition, comprising:
(i) at least one hardener,
(ii) at least one polyester polymer, wherein components (i) and (ii) together form 40 to 99 wt% of the coating composition;
(iii) 0.1 to 10 wt% of at least one silane; and
(iv) 0.1 to 10 wt% of at least one metallic pigment separate from said silane, wherein the pigment contains the metal in elemental or alloy form.

The invention also provides a susbtrate coated with this particulate coating.

Ideally, said particulate coating composition, when applied to a substrate, forms the top layer on the substrate, e.g. the top layer over a primer layer or is free of a phosphoric acid-modified epoxy resin, e.g. one obtained by reacting a monoglycidyl ether compound and/or a monoglycidyl ester compound with a phosphoric acid or phosphoric acid ester.

### Manufacture

It is preferred if the polyester polymer, hardener and optionally the silane are premixed and extruded. Extrusion conditions are known and will generally be kept at low temperature to avoid premature curing. The silane may be added before or after extrusion, preferably before.

The ingredients can be mixed and extruded to form particles as is known in the art, and the particles can then be milled to form powder. Metal pigments can be added after extrusion. If silane was not added before extrusion, it can be added after extrusion, e.g. along with the metallic pigment. As noted above, metallic pigments and powder coatings can be bonded together in a process in which the pigment and the powder coating are mixed and heated to the glass transition temperature of the powder coating. Adhesion of the metallic pigments to the surface of the powder coating particles is therefore achieved.

Pigments can be added before or after milling, preferably after. After milling, sieving can be used to maximise particle distribution homogeneity.

In order to ensure homogeneity before extrusion, the components of the blend must be well mixed. It is preferred to keep the extrudate temperature below 140°C to prevent premature curing.

The extruded granulates can be milled by all types of conventional mills and the particles thereafter classified by a method of choice, to a particle size found most suitable for powder application. The particle size distribution d50 of the powder coating composition may be in the range of 10 to 120 µm with a preferred particle size d50 in the range of from 15 to 75 µm, preferably at least 20 or 25 µm, advantageously not exceeding 50 µm, more especially 20 to 45 µm. In general, particle sizes can be established using a Malvern particle size analyser.

The composition of the invention may also be used "non-bonded" where a powder base coat (with or without silane) is manufactured and then simply blended with the metal pigment (and optionally the silane if the silane is not part of the powder base). The use of bonded compositions is preferred as they are more homogeneous.

### Additives

It will also be appreciated that the powder coatings of the invention may contain a wide variety of standard industry additives. Additives of use include gloss modifiers, scratch resistors, pigments (non corrodible metallic and non-metallic pigments), fillers, degassing additives, flow control agents, waxes, antioxidants, optical brighteners and surface modifying agents. These additives in total can generally form up to about 60 wt% of the powder coating, e.g. up to 40 wt%, ideally up to 20 wt%, such as up to 10 wt% of the coating. Additives might be present in as little as 2 wt% or less of the powder coating, in particular when a primer layer is also present.

Fillers include micronized minerals. Pigments of interest include organic pigments and inorganic pigments such as carbon black.

In particular pigments and fillers may form up to 50 wt% of the coating such as up to 40 wt% on total weight, preferably 2,0-20 wt%. These numbers include therefore the metallic pigment discussed in detail above.

Other additives might form 0.1 to 15 wt% on total weight of the powder coating, such as 0.5 to 15 wt%, preferably 0.7 to 10 wt%, especially 1 to 8 wt%. It will be appreciated that the powder coating of the invention must be dry and free of water and other volatile organic solvents.

### Application to substrates

The powder coating of the invention can be applied to a substrate by any conventional powder coating method such as spraying, e.g. electrostatically. The use of triboelectric guns can also be used. Coating techniques are well known in the art and will be familiar to the skilled man. The coating composition may be used as a one layer coating or used on top of a primer forming a top coat. Preferably, it is the top layer employed on any substrate.

### Substrate

The substrate onto which the powder coatings of the invention should be applied can be any substrate such as a metal substrate (steel, galvanized steel, aluminium), wood, MDF, HDF, plywood, fibreboard, particleboard, plastic, glass, ceramic, graphite-filled composites and so on. Substrates for interior or exterior use are envisaged.

Coated articles include appliances, building components, furniture, vehicles, fixtures and fittings and so on.

The object being coated may be provided with a primer layer although this is not essential. The primer may use zinc or zinc free powder or liquid corrosion inhibiting primer. Typical epoxy and epoxy/polyester primers comprise 0-85 wt% zinc. The powder coating of the invention forms the top coat on any substrate. Thus, no additional coating layer is applied thereon. Substrates may therefore comprise a primer layer and top coat comprising the powder composition of the invention or simply comprise the top coat of the invention without a base primer layer.

### Curing

Once a substrate is coated with the powder coating, the coating must be cured. The coated substrate may be cured in a conventional convection oven or an IR/convection combination oven. It is also possible to use inductive heating. The use of a convection/induction oven or even convection/induction/IR oven is also contemplated. The use of heat curing is preferred.

Where heating is used during cure, the temperature should preferably be in the range of 100 to 250°C, e.g. 150 to 200°C.

The powder coating of the invention can be cured using short curing cycles, e.g. of 15 minutes or less.

The powder coating is preferably free flowing during the curing operation and therefore this leads to smooth, even finishes.

The film thickness of the cured coating is preferably 20 to 200 microns such as 30 to 120 microns especially 40 to 100 microns.

It is also a feature of the invention that the powder coating of the invention does not corrode. The scale of corrosion can be determined by looking at colour changes within the coating. Corrosion resistance is preferably represented by a colour difference Delta E of 1.5 or less after 1000 hrs (ISO 6270-2), such as 1.25 or less. The lack of corrosion also manifests itself in good colour retention and low gloss change. It will be appreciated that the coating should also provide an acceptable metallic effect. The whole point of the coatings of the invention is to provide a coated substrate with a metallic paint effect. The coatings of this invention are able to provide a good metallic effect whilst also reducing corrosion.

The invention will now be described with reference to the following non limiting examples.

### Analytical methods

*Film thickness:* Measured according to ISO 2178.

*Gloss:* Measured according to ISO 2813 at 60° measurement angle.

### Determination of the glass transition temperature

The glass transition temperature (Tg) is obtained by Differential Scanning Calorimetry (DSC) measurements. The DSC measurements were performed on a Metler Toledo DSC 823E instrument. 10 mg dry material were measured in open aluminum pans and scans were recorded at a heating and cooling rate of 20°C/min with an empty pan as reference. The onset value of the glass transition of the second heating is reported as the Tg of the materials.

*Corrosion test:* Corrosion was tested according to ISO 6270-2. The coatings were exposed to condensation atmosphere with constant humidity, i.e. 40 ± 3 °C, 100% relative humidity. Test duration was 1000 h. The panels were checked approximately every 100 h. Gloss and colour before and after the test were measured. In addition a visual ranking of the degree of degradation was performed according to the following scale:
0 = no effect
1 = isolated dark or discoloured spots
2 = numerous spots/slight loss of brilliance
3 = pronounced spots/loss of brilliance
4 = predominantly spotted/marked loss of brilliance
5 = complete destruction

The colour change (dE) and the gloss change describe the corrosion of the panels. The panels with high performance with respect to corrosion have little gloss change and low dE value, while the panels which are highly corroded have high gloss change and high dE values.
Delta L is a measure of lightness
EEW: Measured according to ASTM D-1652
Acid Value (AV): Measured according to ASTM D974

### Examples - general protocols

### Preparation of powder:

The ingredients (except metallic pigment) were dry-mixed in a high speed mixer in order to ensure sufficient dispersion of the powder pre-mix. The pre-mix was then added to an Theysohn TSK 20-24 twin-screw extruder and extruded under the following conditions: 30°C in the feed zone, 50°C in the middle, 100°C at the head at 500 rpm.

The extruded material was fed to a chilled roll and passed through a crusher, reducing the chilled material to flakes. The crushed flakes were then fed to a mill. The extruded chips were milled in a mill and sieved through a 125 µm rotation sieve in order to ensure a particle size distribution (PSD) (d₅₀) of 25-50 µm (determined using a Malvern).

The metallic pigment was then gently mixed with the powder.

### Application of powder to substrate

The powder was applied to panels of iron phosphated cold roll steel using a standard corona charging spray-gun.

### Curing of films

Substrates coated with powder were cured in conventional heat transfer by convection using a Heraeus conventional benchtop oven.

Curing temperature was 190°C object temperature, with 10 minutes curing time at object temperature.

**Table 1**

| Component [wt%] | 1 | 2 | 3 | 4 | 5 | 6 | Comp 1 |
|---|---|---|---|---|---|---|---|
| Carboxyl functional polyester resin (AV 48-58) | 46,61 | 45,68 | 44,79 | 46,61 | 45,68 | 44,79 | 47,19 |
| Epoxy type 3 | 34,59 | 33,91 | 33,24 | 34,59 | 33,91 | 33,24 | 35,02 |
| Flow control additive | 0,73 | 0,72 | 0,70 | 0,73 | 0,72 | 0,70 | 0,74 |
| Benzoine Degassing additive | 0,41 | 0,40 | 0,39 | 0,41 | 0,40 | 0,39 | 0,41 |
| TiO2 | 2,84 | 2,79 | 2,73 | 2,84 | 2,79 | 2,73 | 2,88 |
| Iron oxide Yellow | 0,024 | 0,024 | 0,023 | 0,024 | 0,024 | 0,023 | 0,025 |
| CarbonBlack | 0,012 | 0,012 | 0,012 | 0,012 | 0,012 | 0,012 | 0,012 |
| Filler(nepheline syenite) | 6,82 | 6,69 | 6,56 | 6,82 | 6,69 | 6,56 | 6,91 |
| Matting agent | 6,50 | 6,37 | 6,24 | 6,50 | 6,37 | 6,24 | 6,58 |
| Wax | 0,24 | 0,24 | 0,23 | 0,24 | 0,24 | 0,23 | 0,25 |
| Deolink Amino TE | 1,22 | 3,18 | 5,07 | - | - | - | - |
| Deolink Epoxy TE | - | - | - | 1,22 | 3,18 | 5,07 | - |
| PCS 1000* | 2% | 2% | 2% | 2% | 2% | 2% | 2% |

| | | | | | | | |
|---|---|---|---|---|---|---|---|
| *Metallic pigment is added to the powder composition after extrusion and subsequent milling. 2wt% added in total. PCS 1000 is an aluminium powder coated with monocrystalline silicon dioxide and with particle size d50 of 10 µm, commercially available from Eckart. Deolink Amino TE and Deolink Epoxy TE are both 50 wt% on polymer carrier. Deolink Amino TE = 3-aminopropyltriethoxysilane. Deolink Epoxy TE = silane ([3-(2,3-Epoxypropoxy)propyl]-triethoxysilane | | | | | | | |

The film thickness obtained was 50-100 µm.

### Test results

The reference without any silane corrosion additive (C1) lost all the metallic pigment effect after 500 h. In comparison, the visual inspection of the panels with the silane additives (nos. 1, to 6 ), showed no or limited change in gloss and colour.

Even after 1000 h testing, no 1, 3, 4, 5 and 6 have a very low gloss change and colour change (dE). This is stated in table 2 below.

**Table 2**

| | 1 | 2 | 3 | 4 | 5 | 6 | C1 |
|---|---|---|---|---|---|---|---|
| | | | | | | | |
| Initial gloss | 28 | 34 | 35 | 34 | 32,5 | 32 | 40 |
| Gloss after 1000h | 28 | 27,3 | 33,7 | 33 | 31,7 | 30,6 | 6,8 |
| Delta L | -0,35 | -1,83 | -1,06 | -0,34 | -0,65 | -0,87 | -5,26 |
| Delta E (colour difference) | 0,36 | 1,83 | 1,07 | 0,36 | 0,66 | 0,88 | 5,29 |
| Visual judgment (0-5) | 0 | 0 | 0 | 0 | 0 | 0 | 5 |

## Claims

1. A particulate coating composition, preferably a powder coating composition, comprising:
(i) at least one hardener,
(ii) at least one polyester polymer,
(iii) at least one metallic pigment, wherein the pigment contains the metal in elemental or alloy form; and
(iv) at least one silane not coated onto the metallic pigment, wherein the silane forms 0.1 to 10 wt% of the coating composition;
said coating composition preferably being free of a phosphoric acid-modified epoxy resin, e.g. one obtained by reacting a monoglycidyl ether compound and/or a monoglycidyl ester compound with a phosphoric acid or phosphoric acid ester.

2. A particulate coating composition, preferably a powder coating composition, comprising:
(i) at least one hardener,
(ii) at least one polyester polymer, wherein components (i) and (ii) together form 40 to 99 wt% of the coating composition;
(iii) 0.1 to 10 wt% of at least one metallic pigment, wherein the pigment contains the metal in elemental or alloy form; and
(iv) 0.1 to 10 wt% of at least one silane not coated onto said metallic pigment.

3. A coating composition as claimed in claim 1 or 2 wherein the metallic pigment is not coated with silane, preferably wherein the metallic pigment is uncoated.

4. A coating composition as claimed in claim 1 to 3 wherein the silane is methacryloxypropyltrimethoxysilane, 3-mercaptopropyltri(m)ethoxysilane, 3-glycidoxypropyltrimethoxysilane, tris(3-trimethoxysilylpropyl) isocyanurate, gamma-mercaptopropyltrimethoxysilane, beta-(3,4-epoxycyclohexyl)ethyltrimethoxysilane, gamma-isocyanatopropyltrimethoxysilane, (methacryloxymethyl)trimethoxysilane, isocyanatomethyl)trimethoxysilane, aminopropyltrimethoxysilane, aminopropyltriethoxysilane, N-(2-aminoethyl)-3-aminopropyltrimethoxysilane, N-(2-aminoethyl)-3-aminopropyltriethoxysilane, triamino-functional trimethoxysilane, bis(gamma-trimethoxysilylpropyl)amine, N-ethyl-gamma-aminoisobytyltrimethoxysilane, N-phenyl-gamma-aminopropyltrimethoxysilane, 4-amino-3,3-dimethylbutyltrimethoxysilane, (N-cyclohexylaminomethyl)triethoxysilane, (N-phenylaminomethyl)trimethoxysilane, 3-Aminopropyltriethoxysilane, 3-Aminopropyltrimethoxysilane, N-(Aminoethyl)-aminopropyltrimethoxysilane, 3-aminopropylmethyldiethoxysilane, 3-(2-aminoethylamino)propylmethyldimethoxysilane, 3-(2,3-Epoxypropoxy)propyl]triethoxysilane, and 3-(2,3-Epoxypropoxy)propyl]trimethoxysilane;
preferably ([3-(2,3-Epoxypropoxy)propyl]-triethoxysilane or 3-aminopropyltriethoxysilane.

5. A coating composition as claimed in claim 1 to 4 wherein the metal in the metallic pigment comprises Al.

6. A coating composition as claimed in claim 1 to 5 wherein the metallic pigment forms 0.5 to 5 wt% of the coating composition.

7. A coating composition as claimed in claim 1 to 6 wherein the silane forms 0.6 to 3 wt% of the coating composition.

8. A coating composition as claimed in claim 1 to 7 wherein the hardener is an epoxy resin.

9. A substrate coated with a particulate coating composition, preferably a powder coating composition, comprising:
(i) at least one hardener,
(ii) at least one polyester polymer,
(iii) at least one metallic pigment, wherein the pigment contains the metal in elemental or alloy form; and
(iv) at least one silane not coated onto the metallic pigment, wherein the silane forms 0.1 to 10 wt% of the coating composition
and wherein said particulate coating composition forms the top layer on the substrate.

10. A substrate coated with a primer layer and thereover a particulate coating composition, preferably a powder coating composition, comprising
(i) at least one hardener,
(ii) at least one polyester polymer,
(iii) at least one metallic pigment, wherein the pigment contains the metal in elemental or alloy form; and
(iv) at least one silane not coated onto the metallic pigment, wherein the silane forms 0.1 to 10 wt% of the coating composition;
preferably wherein said particulate coating composition forms the top layer on the substrate.

11. A substrate coated with a particulate coating composition or a substrate coated with a primer layer and thereover a particulate coating composition as defined in claim 9 or 10 wherein said coating composition is cured.

12. A substrate coated with a particulate coating composition, preferably a powder coating composition, comprising a blend of a first particular composition comprising:
(i) at least one hardener such as at least one epoxy containing compound,
(ii) at least one polyester polymer, and
(iii) at least one silane; and
a second particulate composition comprising
(iv) at least one metallic pigment, wherein the pigment contains the metal in elemental or alloy form;
and wherein the silane forms 0.1 to 10 wt% of the overall coating composition

13. A substrate as claimed in claims 9 to 12 wherein the substrate is metallic.

14. A process for producing a particulate coating composition, preferably powder coating composition, comprising blending at least one hardener such as at least one epoxy containing compound and at least one polyester polymer, and optionally at least one silane to form a mixture;
extruding and milling said mixture to obtain particles;
adding at least one metallic pigment, wherein the pigment contains the metal in elemental or alloy form, and optionally a silane to form a particulate powder coating; with the proviso that said silane is added in at least one step of the process and with the proviso that the silane is not coated on the metallic pigment, and wherein the silane forms 0.1 to 10 wt% of the coating composition

15. A process for coating a substrate with a particulate coating as defined in claim 1, e.g. using electrostatic spraying, comprising applying said coating to said substrate, e.g. using electrostatic spraying and optionally curing the coating.

16. Use of a silane to prevent corrosion of a metallic pigment present in a particulate coating composition comprising at least one hardener, at least one polyester polymer, at least one metallic pigment and at least one silane not coated on said metallic pigment,
wherein the pigment contains the metal in elemental or alloy form, and wherein the silane forms 0.1 to 10 wt% of the coating composition

## Patentansprüche

1. Partikelförmige Beschichtungszusammensetzung, vorzugsweise eine pulverförmige Beschichtungszusammensetzung, umfassend:
(i) mindestens ein Härtungsmittel,
(ii) mindestens ein Polyesterpolymer,
(iii) mindestens ein metallisches Pigment, wobei das Pigment das Metall in elementarer oder Legierungsform enthält; und
(iv) mindestens ein Silan, das nicht auf dem metallischen Pigment aufgebracht ist, wobei das Silan 0,1 bis 10 Gew.-% der Beschichtungszusammensetzung bildet;
wobei die Beschichtungszusammensetzung bevorzugt frei von einem phosphorsäuremodifizierten Epoxidharz ist, z. B. einem, das durch Umsetzen einer Monoglycidyletherverbindung und/oder einer Monoglycidylesterverbindung mit einer Phosphorsäure oder einem Phosphorsäureester erhalten wird.

2. Partikelförmige Beschichtungszusammensetzung, vorzugsweise eine pulverförmige Beschichtungszusammensetzung, umfassend:
(i) mindestens ein Härtungsmittel,
(ii) mindestens ein Polyesterpolymer, wobei die Komponenten (i) und (ii) zusammen 40 bis 99 Gew.-% der Beschichtungszusammensetzung bilden;
(iii) 0,1 bis 10 Gew.-% von mindestens einem metallischen Pigment, wobei das Pigment das Metall in elementarer oder Legierungsform enthält; und
(iv) 0,1 bis 10 Gew.-% von mindestens einem Silan, das nicht auf das metallische Pigment aufgebracht ist.

3. Beschichtungszusammensetzung nach Anspruch 1 oder 2, wobei das metallische Pigment nicht mit Silan beschichtet ist, bevorzugt wobei das metallische Pigment unbeschichtet ist.

4. Beschichtungszusammensetzung nach einem der Ansprüche 1 bis 3, wobei das Silan ist:
Methacryloxypropyltrimethoxysilan,
3-Mercaptopropyltri(m)ethoxysilan,
3-Glycidoxypropyltrimethoxysilan,
Tris(3-trimethoxysilylpropyl)isocyanurat,
gamma-Mercaptopropyltrimethoxysilan,
beta-(3,4-Epoxycyclohexyl)ethyltrimethoxysilan,
gamma-Isocyanatopropyltrimethoxysilan,
(Methacryloxymethyl)trimethoxysilan,
isocyanatomethyl)trimethoxysilan,
Aminopropyltrimethoxysilan,
Aminopropyltriethoxysilan,
N-(2-Aminoethyl)-3-aminopropyltrimethoxysilan,
N-(2-Aminoethyl)-3-aminopropyltriethoxysilan,
triaminofunktionelles Trimethoxysilan,
bis(gamma-Trimethoxysilylpropyl)amin,
N-Ethyl-gamma-aminoisobytyltrimethoxysilan,
N-Phenyl-gamma-aminopropyltrimethoxysilan,
4-Amino-3,3-dimethylbutyltrimethoxysilan,
(N-Cyclohexylaminomethyl)triethoxysilan,
(N-Phenylaminomethyl)trimethoxysilan,
3-Aminopropyltriethoxysilan,
3-Aminopropyltrimethoxysilan,
N-(Aminoethyl)aminopropyltrimethoxysilan,
3-Aminopropylmethyldiethoxysilan,
3-(2-Aminoethylamino)propylmethyldimethoxysilan,
[3-(2,3-Epoxypropoxy)propyl]triethoxysilan, und
[3-(2,3-Epoxypropoxy)propyl]trimethoxysilan;
bevorzugt [3-(2,3-Epoxypropoxy)propyl]triethoxysilan oder 3-Aminopropyltriethoxysilan.

5. Beschichtungszusammensetzung nach einem der Ansprüche 1 bis 4, wobei das Metall in dem metallischen Pigment Al umfasst.

6. Beschichtungszusammensetzung nach einem der Ansprüche 1 bis 5, wobei das metallische Pigment 0,5 bis 5 Gew.-% der Beschichtungszusammensetzung bildet.

7. Beschichtungszusammensetzung nach einem der Ansprüche 1 bis 6, wobei das Silan 0,6 bis 3 Gew.-% der Beschichtungszusammensetzung bildet.

8. Beschichtungszusammensetzung nach einem der Ansprüche 1 bis 7, wobei das Härtungsmittel ein Epoxidharz ist.

9. Substrat, beschichtet mit einer partikelförmigen Beschichtungszusammensetzung, bevorzugt einer pulverförmigen Beschichtungszusammensetzung, umfassend:
(i) mindestens ein Härtungsmittel,
(ii) mindestens ein Polyesterpolymer,
(iii) mindestens ein metallisches Pigment, wobei das Pigment das Metall in elementarer oder Legierungsform enthält; und
(iv) mindestens ein Silan, das nicht auf dem metallischen Pigment aufgebracht ist, wobei das Silan 0,1 bis 10 Gew.-% der Beschichtungszusammensetzung bildet
und wobei die partikelförmige Beschichtungszusammensetzung die Deckschicht auf dem Substrat bildet.

10. Substrat, beschichtet mit einer Grundierungsschicht und darüber einer partikelförmigen Beschichtungszusammensetzung, bevorzugt einer pulverförmigen Beschichtungszusammensetzung, umfassend
(i) mindestens ein Härtungsmittel,
(ii) mindestens ein Polyesterpolymer,
(iii) mindestens ein metallisches Pigment, wobei das Pigment das Metall in elementarer oder Legierungsform enthält; und
(iv) mindestens ein Silan, das nicht auf dem metallischen Pigment aufgebracht ist, wobei das Silan 0,1 bis 10 Gew.-% der Beschichtungszusammensetzung bildet;
bevorzugt, wobei die partikelförmige Beschichtungszusammensetzung die Deckschicht auf dem Substrat bildet.

11. Substrat, beschichtet mit einer partikelförmigen Beschichtungszusammensetzung, oder Substrat, beschichtet mit einer Grundierungsschicht und darüber einer partikelförmigen Beschichtungszusammensetzung, wie in Anspruch 9 oder 10 definiert, wobei die Beschichtungszusammensetzung ausgehärtet ist.

12. Substrat, beschichtet mit einer partikelförmigen Beschichtungszusammensetzung, bevorzugt einer pulverförmigen Beschichtungszusammensetzung, umfassend ein Gemisch aus einer ersten Partikelzusammensetzung, umfassend:
(i) mindestens ein Härtungsmittel wie mindestens eine epoxidhaltige Verbindung,
(ii) mindestens ein Polyesterpolymer, und
(iii) mindestens ein Silan; und
eine zweite partikelförmige Zusammensetzung, umfassend
(iv) mindestens ein metallisches Pigment, wobei das Pigment das Metall in elementarer oder Legierungsform enthält;
und wobei das Silan 0,1 bis 10 Gew.-% der gesamten Beschichtungszusammensetzung bildet

13. Substrat nach einem der Ansprüche 9 bis 12, wobei das Substrat metallisch ist.

14. Verfahren zur Herstellung einer partikelförmigen Beschichtungszusammensetzung, bevorzugt pulverförmigen Beschichtungszusammensetzung, umfassend das Vermischen von mindestens einem Härtungsmittel wie mindestens einer epoxidhaltigen Verbindung und mindestens einem Polyesterpolymer und wahlweise mindestens einem Silan zur Bildung eines Gemischs;
Extrudieren und Mahlen des Gemischs, um Partikel zu erhalten;
Zugeben von mindestens einem metallischen Pigment, wobei das Pigment das Metall in elementarer oder Legierungsform enthält, und wahlweise einem Silan, um eine partikelförmige Pulverbeschichtung zu bilden; mit der Maßgabe, dass das Silan in mindestens einem Schritt des Verfahrens zugegeben wird, und mit der Maßgabe, dass das Silan nicht auf dem metallischen Pigment aufgebracht ist, und wobei das Silan 0,1 bis 10 Gew.-% der Beschichtungszusammensetzung bildet

15. Verfahren zum Beschichten eines Substrats mit einer partikelförmigen Beschichtung, wie in Anspruch 1 definiert, z. B. unter Verwendung elektrostatischen Sprühens, umfassend das Aufbringen der Beschichtung auf das Substrat, z. B. unter Verwendung elektrostatischen Sprühens, und das wahlweise Aushärten der Beschichtung.

16. Verwendung eines Silans zur Verhinderung von Korrosion eines metallischen Pigments, das in einer partikelförmigen Beschichtungszusammensetzung vorhanden ist, die mindestens ein Härtungsmittel, mindestens ein Polyesterpolymer, mindestens ein metallisches Pigment und mindestens ein Silan umfasst, das nicht auf dem metallischen Pigment aufgebracht ist,
wobei das Pigment das Metall in elementarer oder Legierungsform enthält, und wobei das Silan 0,1 bis 10 Gew.-% der Beschichtungszusammensetzung bildet.

## Revendications

1. Composition de revêtement particulaire, de préférence une composition de revêtement en poudre, comprenant :
(i) au moins un durcisseur,
(ii) au moins un polymère polyester,
(iii) au moins un pigment métallique, le pigment contenant le métal sous forme élémentaire ou sous forme d'alliage ; et
(iv) au moins un silane non appliqué en revêtement sur le pigment métallique, le silane formant de 0,1 à 10 % en poids de la composition de revêtement ;
ladite composition de revêtement étant de préférence exempte de résine époxy modifiée par l'acide phosphorique, p. ex. de résine obtenue par réaction d'un composé éther monoglycidylique et/ou d'un composé ester monoglycidylique avec un acide phosphorique ou un ester d'acide phosphorique.

2. Composition de revêtement particulaire, de préférence une composition de revêtement en poudre, comprenant :
(i) au moins un durcisseur,
(ii) au moins un polymère polyester, dans lequel les composants (i) et (ii) forment ensemble de 40 à 99 % en poids de la composition de revêtement ;
(iii) de 0,1 à 10 % en poids d'au moins un pigment métallique, le pigment contenant le métal sous forme élémentaire ou sous forme d'alliage ; et
(iv) de 0,1 à 10 % en poids d'au moins un silane non appliqué en revêtement sur ledit pigment métallique.

3. Composition de revêtement selon la revendication 1 ou la revendication 2, dans laquelle le pigment métallique est non revêtu de silane, de préférence dans laquelle le pigment métallique est non revêtu.

4. Composition de revêtement selon la revendication 1 à 3, dans laquelle le silane est
le méthacryloxypropyltriméthoxysilane,
le 3-mercaptopropyltri(m)éthoxysilane,
le 3-glycidoxypropyltriméthoxysilane,
le tris(3-triméthoxysilylpropyl) isocyanurate,
le gamma-mercaptopropyltriméthoxysilane,
le béta-(3,4-époxycyclohexyl)éthyltriméthoxysilane,
le gamma-isocyanatopropyltriméthoxysilane,
le (méthacryloxyméthyl)triméthoxysilane,
le isocyanatométhyl)triméthoxysilane,
le aminopropyltriméthoxysilane,
le aminopropyltriéthoxysilane,
le N-(2-aminoéthyl)-3-aminopropyltriméthoxysilane,
le N-(2-aminoéthyl)-3-aminopropyltriéthoxysilane,
triméthoxysilane à fonction triamine,
le bis(gamma-triméthoxysilylpropyl)amine,
le N-éthyl-gamma-aminoisobytyltriméthoxysilane,
le N-phenyl-gamma-aminopropyltriméthoxysilane,
le 4-amino-3,3-diméthylbutyltriméthoxysilane,
le (N-cyclohexylaminométhyl)triéthoxysilane,
le (N-phenylaminométhyl)triméthoxysilane,
le 3-Aminopropyltriéthoxysilane,
le 3-Aminopropyltriméthoxysilane,
le N-(Aminoéthyl)-aminopropyltriméthoxysilane,
le 3-aminopropylméthyldiéthoxysilane,
le 3-(2-aminoéthylamino)propylméthyldiméthoxysilane,
le 3-(2,3-époxypropoxy)propyl]triéthoxysilane, et
le 3-(2,3-époxypropoxy)propyl]triméthoxysilane ;
de préférence le ([3-(2,3-époxypropoxy)propyl]-triéthoxysilane ou le 3-aminopropyltriéthoxysilane.

5. Composition de revêtement selon la revendication 1 à 4, dans laquelle le métal dans le pigment métallique comprend de l'Al.

6. Composition de revêtement selon la revendication 1 à 5, dans laquelle le pigment métallique forme de 0,5 à 5 % en poids de la composition de revêtement.

7. Composition de revêtement selon la revendication 1 à 6, dans laquelle le silane forme de 0,6 à 3 % en poids de la composition de revêtement.

8. Composition de revêtement selon la revendication 1 à 7, dans laquelle le durcisseur est une résine époxy.

9. Substrat revêtu d'une composition de revêtement particulaire, de préférence d'une composition de revêtement en poudre, comprenant :
(i) au moins un durcisseur,
(ii) au moins un polymère polyester,
(iii) au moins un pigment métallique, dans lequel le pigment contient le métal sous forme élémentaire ou sous forme d'alliage ; et
(iv) au moins un silane non appliqué en revêtement sur le pigment métallique, le silane formant de 0,1 à 10 % en poids de la composition de revêtement
et dans lequel ladite composition de revêtement particulaire forme la couche supérieure sur le substrat.

10. Substrat revêtu d'une couche d'apprêt et, par-dessus, d'une composition de revêtement particulaire, de préférence d'une composition de revêtement en poudre, comprenant
(i) au moins un durcisseur,
(ii) au moins un polymère polyester,
(iii) au moins un pigment métallique, dans lequel le pigment contient le métal sous forme élémentaire ou sous forme d'alliage ; et
(iv) au moins un silane non appliqué en revêtement sur le pigment métallique, dans lequel le silane forme de 0,1 à 10 % en poids de la composition de revêtement ;
de préférence dans lequel ladite composition de revêtement particulaire forme la couche supérieure sur le substrat.

11. Substrat revêtu d'une composition de revêtement particulaire ou substrat revêtu d'une couche d'apprêt et, par-dessus, d'une composition de revêtement particulaire telle que définie dans la revendication 9 ou la revendication 10, dans lequel ladite composition de revêtement est durcie.

12. Substrat revêtu d'une composition de revêtement particulaire, de préférence d'une composition de revêtement en poudre, comprenant un mélange d'une première composition particulière comprenant :
(i) au moins un durcisseur tel qu'au moins un composé contenant de l'époxy,
(ii) au moins un polymère polyester, et
(iii) au moins un silane ; et
une seconde composition de revêtement particulaire comprenant
(iv) au moins un pigment métallique, dans lequel le pigment contient le métal sous forme élémentaire ou sous forme d'alliage ;
et dans lequel le silane forme de 0,1 à 10 % en poids de la composition de revêtement globale

13. Substrat selon les revendications 9 à 12, dans lequel le substrat est métallique.

14. Procédé de production d'une composition de revêtement particulaire, de préférence une composition de revêtement en poudre, comprenant le mélange d'au moins un durcisseur tel qu'au moins un composé contenant de l'époxy et d'au moins un polymère polyester, et facultativement d'au moins un silane pour former un mélange ;
l'extrusion et le broyage dudit mélange pour obtenir des particules ;
l'ajout d'au moins un pigment métallique, le pigment contenant le métal sous forme élémentaire ou sous forme d'alliage, et facultativement d'un silane pour former un revêtement en poudre particulaire ; à la condition que ledit silane soit ajouté dans au moins une étape du procédé et à la condition que le silane soit non appliqué en revêtement sur le pigment métallique, et dans lequel le silane forme de 0,1 à 10 % en poids de la composition de revêtement.

15. Procédé pour revêtir un substrat avec un revêtement particulaire tel que défini dans la revendication 1, p. ex. en utilisant une pulvérisation électrostatique, comprenant l'application dudit revêtement sur ledit substrat, p. ex. en utilisant une pulvérisation électrostatique et, facultativement, le durcissement dudit revêtement.

16. Utilisation d'un silane pour empêcher la corrosion d'un pigment métallique présent dans une composition de revêtement particulaire comprenant au moins un durcisseur, au moins un polymère polyester, au moins un pigment métallique et au moins un silane non appliqué en revêtement sur ledit pigment métallique,
dans laquelle le pigment contient le métal sous forme élémentaire ou sous forme d'alliage, et dans laquelle le silane forme de 0,1 à 10 % en poids de la composition de revêtement.
